# EUROPÄISCHE PATENTSCHRIFT

(11) **EP 1 960 681 B1**
(45) Veröffentlichungstag und Bekanntmachung des Hinweises auf die Patenterteilung: **23.02.2011**
(21) Anmeldenummer: 06818572.7
(22) Anmeldetag: 16.11.2006
(51) Int. Cl.: F16D 48/04

(54) **HYDRAULIKSYSTEM AN KRAFTFAHRZEUGEN**
HYDRAULIC SYSTEM IN MOTOR VEHICLES
SYSTEME HYDRAULIQUE SUR VEHICULES AUTOMOBILES

(30) Priorität: 13.12.2005 DE 102005059356
(43) Veröffentlichungstag der Anmeldung: 27.08.2008
(73) Patentinhaber: ZF Friedrichshafen AG, 88038 Friedrichshafen (DE)
(72) Erfinder: SCHIELE, Peter, 88079 Kressbronn (DE); POPP, Christian, 88079 Kressbronn (DE); SCHMIDT, Thilo, 88074 Meckenbeuren (DE)
(86) Internationale Anmeldenummer: PCT/EP2006/010981
(87) Internationale Veröffentlichungsnummer: WO 2007/068319

(56) Entgegenhaltungen:
- EP-A- 0 348 270
- EP-A1- 1 236 918
- WO-A-02/079661
- WO-A2-2004/040158
- DE-A1- 10 128 856

## Beschreibung

Die Erfindung betrifft ein Hydrauliksystem an Kraftfahrzeugen mit zumindest einer hydraulisch betätigbaren Kupplung, wobei zur Betätigung derselben von einer Ölpumpe ein Öldruck bereitstellbar ist, gemäß dem Oberbegriff des Patentanspruchs 1.

Aus der DE 43 42 233 A1 ist eine Ölpumpenantriebsvorrichtung bekannt, die mit einem an eine Antriebsmaschine gekoppelten Getriebe kombiniert ist, um dem Getriebe Arbeitsöl zur Schmierung zuzuführen und um dem Getriebe Schaltvorgänge zu ermöglichen. Hierbei umfasst das Getriebe einen ersten Kraftübertragungsweg zum Anschließen der Ausgangswelle eines Elektromotors an die Antriebswelle der Ölpumpe und einen zweiten Kraftübertragungsweg zum Anschließen der Ausgangswelle der Antriebsmaschine an die Antriebswelle der Ölpumpe. Eine Steuerungseinrichtung wählt den ersten Kraftübertragungsweg zum Antrieb der Ölpumpe mit dem Elektromotor, wenn die Drehzahl der Ausgangswelle der Antriebsmaschine unter einer vorbestimmten Drehzahl liegt, und wählt den zweiten Kraftübertragungsweg, wenn die Drehzahl dieser Antriebsmaschine die vorbestimmte Drehzahl überschreitet.

Weiter ist aus der DE 101 43 929 A1 eine elektrohydraulische Getriebesteuervorrichtung zum Erzeugen und Abgeben von Hydraulikdruck-Eingangssignalen an die Kupplungen, Bremsen und Schaltmechanismen eines Automatgetriebes bekannt, wobei ein so genannter Modulkörper die Bauteile der Getriebesteuervorrichtung aufnimmt und trägt sowie Strömungsmittelleitungen bildet. Mehrere Steuerventile sind an dem Modulkörper angebracht und steuern Hydraulikflüssigkeit durch die Leitungen. Ferner sind mehrere Magnetsteuerventile am Modulkörper angeordnet. Ein Regler ist zudem mit den Elektromagneten der Magnetsteuerventile verbunden und steuert dieselben durch Betätigung der Elektromagnete in Abhängigkeit von Eingangssignalen, die von Sensoren zum Erfassen verschiedener Parameter des Betriebszustandes des Fahrzeuges bereitgestellt werden. Eine mechanisch oder elektrisch antreibbare Ölpumpe, die in die Getriebesteuervorrichtung integriert ist, liefert das Drucköl für die Steuerventile.

Mit der DE 101 62 973 A1 wird des Weiteren ein Automatgetriebe mit einer verbrennungsmotorisch angetriebenen Hauptölpumpe, einer elektromotorisch angetriebenen Zusatzölpumpe sowie mit einer Antriebssteuervorrichtung für die elektromotorisch angetriebene Zusatzölpumpe vorgeschlagen, wobei die derselben zugeführte Betriebsspannung auf der Grundlage der gemessenen Öltemperatur entsprechend den jeweiligen Betriebsbedingungen des Automatgetriebes angepasst wird. Im Wesentlichen soll der notwendige Hydraulikdruck aufrechterhalten und des Weiteren verhindert werden, dass ein größerer hydraulischer Druck als notwendig zugeführt wird. Ungeachtet dessen ist hier noch eine hydraulische Steuerungsvorrichtung vorgesehen, die ihrerseits mit erhöhtem Aufwand einhergeht.

Um den Aufwand für eine elektrische Zusatzölpumpe gering zu halten, wird in der EP 1 223 365 A2 vorgeschlagen, in bestimmten Betriebszuständen zur Aufrechterhaltung des notwendigen Kupplungsdrucks eine mechanisch und eine elektromotorisch angetriebene Ölpumpe gemeinsam zu betreiben, und dann, wenn der gemessene Kupplungsdruck einen Wert erreicht, den die mechanische Hauptölpumpe alleine liefern kann, die elektrische Zusatzölpumpe sofort abzuschalten. Demnach wird die Zusatzölpumpe derart angesteuert, dass ein erforderlicher und gemessener System- und Kupplungsdruck im Getriebe aufrechterhalten wird.

Aus der US 6,390,947 B1 ist ein Hydraulikkreislauf zur Kontrolle des gelieferten Öldruckes an ein Automatgetriebe eines Fahrzeugs mit einer vom Antriebsmotor angetriebenen mechanischen Ölpumpe und mit einer Motor-Start-Stopp-Automatik bekannt. Im Hydraulikkreislauf ist eine Bypassleitung mit einer elektrisch angetriebenen Ölpumpe angeordnet, wodurch die mechanisch und die elektrisch antreibbare Ölpumpe parallel geschaltet sind. Auch durch diese Maßnahme soll der Öldruck im System an die aktuellen Betriebsbedingungen angepasst werden.

Schließlich ist aus der US 4,531,485 B eine Verschaltungslogik für eine mechanisch angetriebene Ölpumpe und eine elektrisch angetriebene Zusatzölpumpe an einem Verbrennungsmotor bekannt.

Zusammenfassend und ergänzend kann festgestellt werden, dass hydraulisch betätigbare Kupplungen über Kupplungsventile, elektrische Druckregler, getaktete Magnetventile, Aktuatoren und/oder andere Bauteile angesteuert werden. Die Druckversorgung übernimmt überwiegend eine mechanische Ölpumpe, welche über die Antriebsmaschine des Hauptantriebs (Brennkraftmaschine) eines Fahrzeugs angetrieben wird. Ferner sind auch elektrische Ölpumpen bekannt, die die mechanische Ölpumpe antriebstechnisch ergänzen (Zusatzölpumpe).

Diesen elektrischen Ölpumpen ist herkömmlich eine hydraulische Steuerung nachgeschaltet, welche zumindest aus einem hydraulisch betätigtem Ventil (Kupplungsventil) und einem elektrischen Aktuator, wie einem elektronischen Drucksteuerventil oder einem hydraulischem Aktuator besteht. Zudem weisen derartige hydraulische Steuerungen des Öfteren noch eine Systemdrucksteuerung auf, welche das hydraulische Leistungsangebot der Ölpumpe (meist ein Überangebot zur sicheren Deckung des Maximalbedarfs) begrenzt, indem zuviel gefördertes Öl in die Saugleitung der Ölpumpe oder in den Ölsumpf geleitet wird.

Sind beispielsweise einzelne anzusteuernde Kupplungen in Baugruppen eines Fahrzeugs angeordnet, wie z. B. in einem Verteilergetriebe, welches auch mit Handschaltgetrieben kombiniert sein kann und dann keine Druckversorgung von einem Automatgetriebe nutzen kann, ist ein erheblicher Steuerungsaufwand durch die genannte Ölpumpe, Systemsteuerung, Kupplungsventil und elektrische Aktuatoren zur Druckbetätigung der Kupplungen zu verzeichnen. Je weniger Kupplungen dabei in einer solchen Baugruppe anzusteuern sind, desto größer sind die Kosten für diesen Aufwand, bezogen auf die zu betätigende Kupplung.

Des Weiteren ist festzustellen, dass die Kühlung von bekannten nasslaufenden Kupplungen im Stand der Technik zwar oft schon bedarfsgerecht steuerbar ausgeführt ist, jedoch einen zusätzlichen Steuerungsaufwand bedeutet und die Dimensionierung der Ölpumpe beeinflusst. Insoweit ist eine Verschlechterung des Wirkungsgrades der Ölpumpe durch eine zu große Dimensionierung des Fördervolumenbedarfs für die nasslaufende Kupplung zu verzeichnen.

Ein gattungsgerriäßes Hydrauliksystem ist aus der EP 1 236 918 A1 bekannt. Hierin ist vorgesehen, dass der zur hydraulischen Betätigung einer Doppelkupplung notwendige Druck unmittelbar und ausschließlich von einer elektrisch antreibbaren und elektrisch ansteuerbaren ersten Ölpumpe bereitgestellt wird, wohingegen der zur Kühlung der Kupplungen erforderlichen Kühlvolumenstrom von einer mechanisch angetriebenen zweiten Ölpumpe bereitsgestellt wird.

Vor diesem Hintergrund liegt der Erfindung die Aufgabe zugrunde, das gattungsgemäße Hydrauliksystem dahingehend zu verbessern, dass der Kühlvolumenstrom an den Bedarf anpassbar ist.

Die Lösung dieser Aufgabe ergibt sich aus den Merkmalen des Patentanspruchs 1 bzw. aus den Merkmalen des Patentanspruchs 2. Vorteilhafte Ausgestaltungen und Weiterbildungen der Erfindung sind den Unteransprüchen entnehmbar.

Demnach wird die gestellte Aufgabe gelöst durch ein Hydrauliksystem an einem Kraftfahrzeug mit zumindest einer hydraulisch betätigbaren Kupplung, zu deren Betätigung von einer Ölpumpe ein Öldruck bereitstellbar ist, und bei der die Druckansteuerung der Kupplung unmittelbar und ausschließlich mittels einer elektrisch antreibbaren und elektronisch ansteuerbaren ersten Ölpumpe erfolgt. Dadurch lassen sich vorteilhaft zumindest eine Mehrzahl der im Stand der Technik zusätzlich genutzten Steuerungsventile einsparen.

Da es sich bei der genannten Kupplung um eine nasslaufende Kupplung handelt, so kann die erste Ölpumpe auch zur Kühlölversorgung derselben genutzt werden, wobei zur Gewährleistung eines Dauerbetriebs der ersten Ölpumpe und einem dynamischen Ansprechen derselben auf variierende Druckvorgaben ein Bypass im Hydrauliköl- bzw. Kühlölkreislauf mit einem Bypassventil oder einer Bypassdrossel vorgesehen sein. Der gebildete Bypass kann derart ausgebildet sein, dass die realisierte "innere Leckage" der ersten Ölpumpe der Saugseite derselben und/oder der Kupplung zumindest als Grundversorgung für eine Kühlung zuführbar ist.

Wie die Erfindung weiter vorsieht, ist der genannten nasslaufenden Kupplung zur Deckung eines etwaigen erhöhten Kühlölvolumenstromes derselben eine mechanisch antreibbare zweite Ölpumpe zugeordnet. Die mechanisch antreibbare zweite Ölpumpe kann mit der nasslaufenden Kupplung derart wirkverbunden sein, dass diese zweite Ölpumpe mit Hilfe geeigneter mechanischer Antriebsmittel durch eine Drehzahldifferenz zwischen der Primärseite und der Sekundärseite der Kupplung antreibbar ist.

Demgegenüber kann es auch angezeigt sein, dass die mechanisch angetriebene zweite Ölpumpe mit der nasslaufenden Kupplung über eine vorgeschaltete Abtriebsübersetzung derart wirkverbunden ist, dass sich in jedem Fall eine Mindestpumpendrehzahl einstellt, die eine Ölförderung bewirkt.

Ebenso ist es möglich, dass die mechanisch angetriebene zweite Ölpumpe von einer beliebigen vorhandenen Bauteildrehzahl in einer Antriebseinrichtung angetrieben ist und sich an einem drehfesten Bauteil abstützt. Die besagte Bauteildrehzahl kann von einem beliebigen drehenden Bauteil des Antriebsstrangs des Kraftfahrzeugs bereitgestellt und das drehfeste Bauteil durch ein Gehäuseteil, wie etwa einem Getriebegehäuse o. a. gebildet sein.

Durch die vorstehenden besonderen Ausbildungsvarianten des mechanischen Antriebes der zweiten Ölpumpe ist eine bedarfsgerechte Kühlölversorgung ohne aufwendige Steuerungsmaßnahmen realisiert. Des Weiteren lässt sich durch diese Maßnahmen auch der Wirkungsgrad wesentlich verbessern, da geringere Schleppmomente der Kupplung bzw. weniger Blindleistung der Pumpe zu verzeichnen sind.

Wie die Erfindung weiter vorsieht, ist der Saugseite oder der Druckseite der mechanisch angetriebenen zweiten Ölpumpe zum Freischalten der Kühlung zumindest ein hydraulisch betätigbares Schaltventil oder ein elektrisch betätigbarer Aktuator, wie ein Magnetventil oder dergleichen zugeordnet. Das zumindest eine hydraulisch betätigbare Schaltventil ist dabei bedarfsgerecht über den von der elektronischen Pumpensteuerungseinheit vorgegebenen Ansteuerdruck der elektrisch angetriebenen und elektronisch angesteuerten ersten Ölpumpe betätigbar.

Was den zumindest einen elektrisch betätigbaren Aktuator anbelangt, so kann dieser bedarfsgerecht von der elektronischen Pumpensteuerungseinheit oder jeglichen anderen geeigneten Steuereinheit aktivierbar oder deaktivierbar sein.

Weiter wird vorgeschlagen, dass die Kühlung sowohl bei aktiver Kupplungsbetätigung als auch dann, wenn die nasslaufende Kupplung in einem teilweise geöffneten Zustand mit Differenzdrehzahl betrieben werden muss, bei welchem im Hinblick auf die bereits oben erwähnten zu erzielenden niedrigen Schleppmomente wenig Kühlmenge wünschenswert ist, über das Öffnen des zumindest einen hydraulisch betätigbaren Schaltventils oder elektrisch betätigbaren Aktuators freigeschaltet und ansonsten unterbrochen ist.

Des Weiteren wird es als zweckmäßig erachtet, wenn der nasslaufenden Kupplung ein Pufferspeicher zur vorübergehenden Aufnahme von überschüssigem Kühlöl infolge erhöhter Fördermengen bei kurzzeitigen Drehzahlspitzen der mechanisch angetriebenen zweiten Ölpumpe zugeordnet ist. Der gespeicherte Ölüberschuss kann dann zur Nachkühlung einsetzbar sein, nachdem sich die Drehzahlspitze und demgemäß das Volumenstrommaximum abgebaut haben.

Schließlich kann vorgesehen sein, dass die Kühlölzufuhr zur nasslaufenden Kupplung von radial innen nach radial außen oder umgekehrt ausgebildet ist beziehungsweise erfolgen kann.

Zur Regelung des Öldrucks ist gemäß einer ersten vorteilhaften Ausgestaltung der Erfindung dieser elektrisch antreibbaren und elektronisch ansteuerbaren Ölpumpe zumindest ein Öldrucksensor zugeordnet, der Messwerte einer elektronischen Pumpensteuereinheit zur Verfügung stellt, welche ihrerseits in Abhängigkeit von bereitgestellten Kupplungsdruck- und/oder Kupplungsdrehmomentvorgaben Steuersignale zur Ansteuerung des Elektromotors der Ölpumpe generiert.

Gemäß einer zweiten vorteilhaften Weiterbildung der Erfindung kann der elektrisch antreibbaren und elektronisch ansteuerbaren Ölpumpe zur Regelung des Öldruckes zumindest ein so genannter Pumpenstromsensor, also ein Sensor zur Erfassung des elektrischen Stroms für die Ölpumpe, oder ein Pumpendrehmomentsensor oder ein Pumpendrehzahlsensor zugeordnet sein, wobei die ermittelten Messwerte der elektronischen Pumpensteuereinheit zur Verfügung gestellt werden, die ihrerseits in Abhängigkeit von bereitgestellten Kupplungsdruck- und/oder Kupplungsdrehmomentvorgaben Steuersignale zur Ansteuerung des Elektromotors der Ölpumpe generiert.

Bei der Ermittlung der besagten Steuersignale können des Weiteren die gemessene aktuelle Temperatur und/oder die Viskosität des Hydrauliköls Berücksichtigung finden.

Die Pumpensteuereinheit kann ferner als separate Steuerungseinheit ausgebildet oder in andere an sich bekannte Steuerungsvorrichtungen des Antriebsstranges des Kraftfahrzeugs, wie etwa eine Getriebesteuerung, eine Motorsteuerung o. a., implementiert sein.

Zur Verdeutlichung der Erfindung ist der Beschreibung eine Zeichnung beigefügt. In dieser zeigen
- Fig. 1: ein Prinzipschema der erfindungsgemäßen Druckansteuerung einer hydraulisch betätigbaren Kupplung,
- Fig. 2: ein Prinzipschema betreffend die Anordnung einer mechanisch angetriebenen Ölpumpe zur Kühlung einer hydraulisch betätig- baren nasslaufenden Kupplung am Beispiel eines Verteilerge- triebes gemäß einer ersten Ausgestaltungsvariante, und
- Fig. 3: ein Prinzipschema wie in Fig. 2, jedoch in einer weiteren Ausges- taltungsvariante.

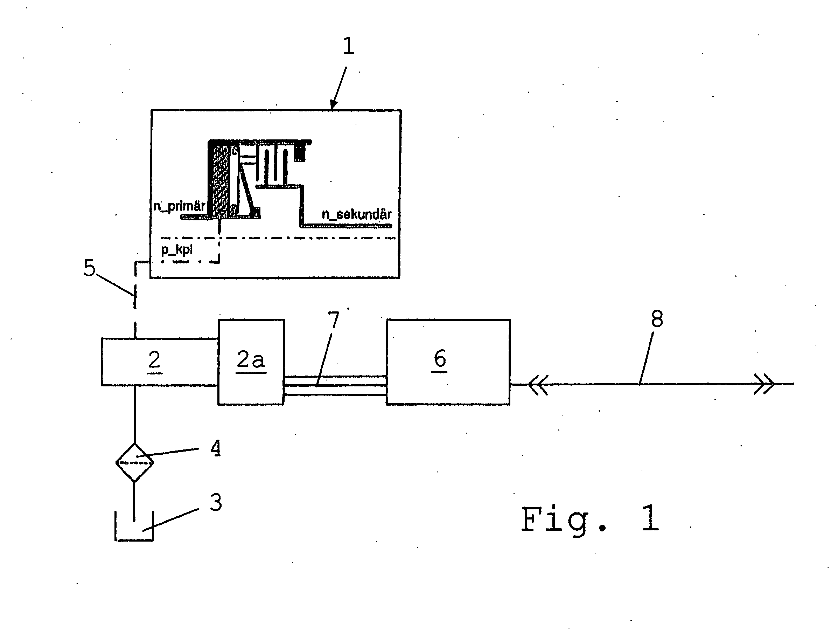

Demnach zeigt Fig. 1 sehr schematisch eine hydraulisch betätigbare Kupplung 1, vorliegend eine Lamellen- bzw. Scheibenkupplung eines an sich bekannten und demgemäß im Einzelnen nicht näher dargestellten Getriebes, beispielsweise eines Verteilergetriebes eines Kraftfahrzeugs.

Wie bereits oben ausgeführt wurde, ist die Drucksteuerung der Kupplung 1 nunmehr direkt und ausschließlich mittels einer elektrisch angetriebenen und elektronisch angesteuerten Ölpumpe 2 bewerkstelligt. Das erforderliche Hydrauliköl wird dabei einem Tank beziehungsweise Ölsumpf 3 entnommen und über einen Ansaugfilter 4 mittels der elektrisch angetriebener Ölpumpe 2 über einen Druckkanal 5 der Kupplung 1 als Kupplungsbetätigungsdruck p_kpl zugeführt.

Der Ölpumpe 2 ist eine elektronische Pumpensteuereinheit 6 zugeordnet, die in Abhängigkeit von bereitgestellten Kupplungsdruckvorgaben und/oder Kupplungsdrehmomentvorgaben sowie in Auswertung von laufend mittels eines nicht näher gezeigten Öldrucksensors zur Verfügung gestellten Messwerten Steuersignale zur Ansteuerung des Elektromotors 2a der Ölpumpe 2 respektive zur Regelung des Steuerstroms 7 derselben generiert. Insofern sind die Ölpumpe 2 und die Pumpensteuereinheit 6 zweckmäßigerweise an das elektrische Bordnetz 8 des Kraftfahrzeugs angeschlossen.

Alternativ zu dem Öldrucksensor können auch ein Pumpenstromerfassungssensor, ein Pumpendrehmomentsensor oder ein Pumpendrehzahlsensor genutzt werden, deren Messwerte der Pumpensteuereinheit 6 zur Auswertung zugeführt werden (nicht weiter dargestellt). Wird der jeweils aktuell anliegende Pumpendruck alternativ zum Drucksensor nicht gemessen sondern berechnet, so kann der Berechnungsalgorithmus über eine Temperaturerfassung des Hydrauliköls und unter Berücksichtigung der Viskosität desselben verfeinert bestimmt werden.

Vorliegend ist die Pumpensteuereinheit 6 als separate Steuerungseinheit ausgebildet. Sicherlich ist es auch möglich und wird durch die Erfindung demgemäß mit erfasst, dieselbe in andere an sich bekannte und hier nicht näher gezeigte Steuerungsvorrichtungen des Antriebsstranges des Kraftfahrzeugs, wie eine Getriebesteuerungsvorrichtung, eine Motorsteuerungsvorrichtung o. a., zu implementieren oder als Vor-Ort-Elektronik unmittelbar im Bereich der Pumpe anzuordnen oder auch in eine durch die Pumpe mit Druck versorgte hydraulische Steuerung zu integrieren.

Handelt es sich bei der Kupplung 1 um eine nasslaufende Kupplung 1, so kann der Ölpumpe 2 ein Bypass im Hydraulikkreislauf mit einem Bypassventil oder einer Bypassdrossel zugeordnet sein (nicht näher dargestellt). Hierdurch sind die Voraussetzungen für einen Dauerbetrieb der Ölpumpe 2 geschaffen, ohne einen wesentlichen Nutzdruck zur Kupplungsbetätigung bereitzustellen, wodurch ein dynamisches Ansprechen der Ölpumpe 2 auf variierende Druckvorgaben gestattet ist, wenn die Ölpumpe 2 schon läuft und nicht erst bei Bedarf aus dem Stand heraus gestartet werden muss. Die dabei realisierte so genannte "innere Leckage" der Ölpumpe 2 kann zweckmäßigerweise zur Beibehaltung beziehungsweise Erhöhung des Wirkungsgrades der Ölpumpe 2 wieder in die Saugseite derselben eingespritzt werden.

Bei nasslaufender Kupplung 1 bietet es sich des Weiteren an, die genannte innere Leckage" als Grundversorgung für die Kühlung der Kupplung 1 zu verwenden. Zudem kann diese "Leckage" auch so ausgelegt sein, dass diese für die Kühlung der Kupplung 1 ausreichend ist, welches sich insbesondere für weniger belastete Kupplungen 1 anbietet, so dass auf eine aufwendige Kupplungskühlung mit dem entsprechenden Bauaufwand verzichtet werden kann.

Handelt es sich dagegen beispielsweise um eine hoch belastete nasslaufende Kupplung 1, beispielsweise eine nasslaufende Kupplung 1 eines Verteilergetriebes 9, so ist zur Deckung eines etwaigen erhöhten Kühlvolumenstromes derselben eine mechanisch angetriebene zweite Ölpumpe 10 zugeordnet.

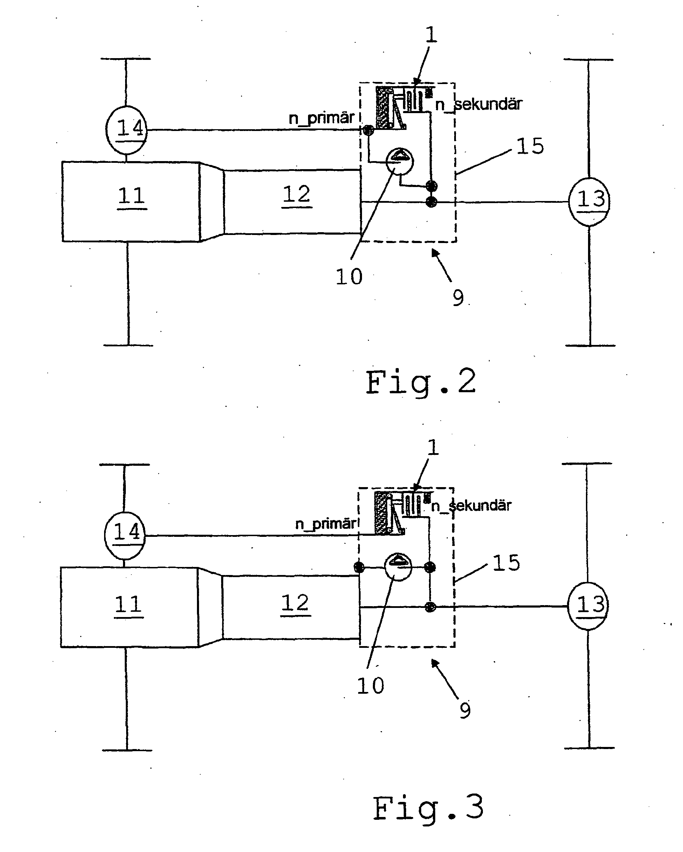

Fig. 2 zeigt äußerst schematisch einen ein Verteilergetriebe 9 aufweisenden Antriebsstrang eines Kraftfahrzeugs, mit einem Antriebsmotor 11, einem Getriebe 12 sowie der Hinterachse 13 und der Vorderachse 14, an denen jeweils Differentialgetriebe angedeutet sind. Die Differentialgetriebe der beiden Fahrzeugachsen 13 und 14 werden von nicht näher bezeichneten Antriebswellen angetrieben, welche über das Verteilergetriebe 9 mit der Ausgangswelle des Getriebes 12 in Antriebsverbindung stehen. Das Differentialgetriebe der Vorderachse 14 ist dabei über die nasslaufende Kupplung 1 mit dem Verteilergetriebe 9 wirkverbindbar, und kann so bedarfsgerecht mit einem Antriebsdrehmoment beaufschlagt werden.

Vorliegend ist die zweite Ölpumpe 10 derart mit der Kupplung 1 mechanisch wirkverbunden, dass die Ölpumpe 10 in Abhängigkeit von der Differenz der Kupplungsdrehzahlen n_sekundär - n_primär bzw. n_primär - n_sekundär zwischen der Primärseite und der Sekundärseite der Kupplung 1 drehzahlgesteuert ist, wodurch auch eine schlupfgesteuerte Ölförderung der Ölpumpe 10 nutzbar ist, welches eine einfache und bedarfsgerechte Kühlölversorgung der Kupplung 1 gestattet. In dem in Fig. 2 dargestellten Beispiel ist das Gehäuse der Ölpumpe 10 mit der Sekundärseite und das Fördermittel der Ölpumpe 10 mit der Primärseite der nasslaufenden Kupplung 1 verbunden, an welche auch die zur Vorderachse 14 führende Antriebswelle angebunden ist, wobei die Ölpumpe 10 das Öl aus einem Tank oder Ölsumpf ansaugt und selbstverständlich auch andere Bauteile als die Kupplung 1 mit benötigtem Kühlöl versorgen kann.

Sofern keine Differenzdrehzahl zwischen der Primärseite und der Sekundärseite der Kupplung 1 vorliegt, ist bekanntermaßen eine nur geringe Menge an Kühlöl zur Nachkühlung bzw. Konstantkühlung derselben ausreichend, welche beispielsweise aus der oben erwähnten "inneren Leckage" der elektrisch angetriebenen und elektronisch angesteuerten Ölpumpe 2 resultieren kann.

Erst dann, wenn eine Differenzdrehzahl zwischen der Primärseite und der Sekundärseite der Kupplung 1 vorliegt, steigt bei anstehendem Kupplungsdrehmoment der Kühlölbedarf erheblich an, der dann durch die zwangsgekoppelte Förderleistung der mechanisch angetriebenen zweiten Ölpumpe 10 gedeckt wird.

Für den Fachmann ist in Kenntnis der Erfindung leicht nachvollziehbar dass es auch angezeigt sein, die mechanisch angetriebene zweite Ölpumpe 10 mit der nasslaufenden Kupplung 1 über eine nicht näher dargestellte zusätzlich antriebstechnisch vorgeschaltete Übersetzung derart zu verbinden, dass sich in jedem Fall, also auch bei fehlender oder nur sehr geringer Differenzdrehzahl zwischen der Primär- und der Sekundärseite der Kupplung 1, eine Pumpendrehzahl einstellt, die eine bestimmte Mindest-Ölförderung zur Deckung des Grundbedarfes an Kühlöl bewirkt.

Ebenso kann die mechanisch angetriebene Ölpumpe 10 auch mit einer beliebigen, im Antriebsstrang vorhandenen Bauteildrehzahl angetrieben sein, und sich an einem drehfesten Bauteil 15, wie beispielsweise einem Getriebegehäuse, abstützen.

Gemäß dem Ausführungsbeispiel nach Fig. 3 ist die mechanisch angetriebene zweite Ölpumpe 10 mit ihrem Fördermittel mit dem Sekundärteil der Kupplung 1 wirkverbunden und stützt sich mit ihrem Pumpengehäuse am Gehäuse des Verteilergetriebes 9 ab, welches auch als ein an sich bekanntes Automatgetriebe ausgebildet sein kann.

Insbesondere bei herkömmlichen Automatgetrieben hat es sich als zweckmäßig erwiesen, den Ölkreislauf zur Kühlung der Kupplung 1 absperrbar auszubilden, wobei erst mit aktiver Kupplungsbetätigung bzw. wenn die Kupplung 1 in einem zumindest teilweise offenen Zustand mit Differenzdrehzahl betrieben werden muss, die Kühlung frei geschaltet, ansonsten jedoch unterbrochen wird.

Insoweit ist der Saugseite oder der Druckseite der mechanisch angetriebenen Ölpumpe 10 zum Freischalten bzw. Unterbrechen der Kühlung zumindest ein hydraulisch betätigbares Schaltventil oder ein elektrisch betätigbarer Aktuator, wie ein Magnetventil zugeordnet (nicht näher dargestellt). Das zumindest eine hydraulisch betätigbare Schaltventil kann in vorteilhafter Weise bedarfsgerecht über den von der elektronischen Pumpensteuereinheit 6 (Fig. 1) vorgegebenen Ansteuerdruck der elektrisch angetriebenen Ölpumpe 2 betätigbar sein.

Wird dagegen ein elektrisch betätigbarer Aktuator verwendet, so kann dieser direkt von der elektronischen Pumpensteuereinheit 6 oder jeglichen anderen geeigneten und am Antriebsstrang des Kraftfahrzeugs verbauten Steuerungseinheit bedarfsgerecht aktivierbar oder deaktivierbar sein.

Als zweckmäßig hat es sich ferner erwiesen, wenn die nasslaufende Kupplung 1 einen Pufferspeicher zur vorübergehenden Aufnahme von überschüssigem, also aus infolge etwaiger Drehzahlspitzen erhöhter Förderleistung der mechanisch angetriebenen zweiten Ölpumpe 10 resultierendem Kühlöl aufweist. Derartige Drehzahlspitzen oder auch Differenzdrehzahlspitzen unter Last können nämlich eine gewisse kurzzeitige erhöhte Förderleistung der Ölpumpe 10 und somit einen ansteigenden Kühlölvolumenstrom bewirken, welchen die Kupplung 1 jedoch kurzfristig nicht durchsetzen kann. Haben sich eine etwaige Drehzahlspitze und demgemäß ein Volumenstrommaximum abgebaut, so kann der gespeicherte Ölüberschuss beispielsweise zur Nachkühlung der Kupplung eingesetzt werden.

Ein derartiger Pufferspeicher kann beispielsweise als ein Ölreservoir ausgebildet sein, der unmittelbar an oder in der Kupplung angeordnet ist und bei auftretenden Volumenstromspitzen gefüllt bzw. geladen wird.

Wie den Figuren 1 bis 3 weiter entnommen werden kann, ist vorliegend die Kühlölzufuhr zur nasslaufenden Kupplung 1 von radial innen, also vom Drehzentrum nach radial außen ausgebildet. Selbstverständlich beschränkt sich die Erfindung nicht auf diese Ausführungsform, sondern gestattet auch eine Kühlölzufuhr von radial außen nach radial innen.

### Bezugszeichen

- 1: Kupplung
- 2: Ölpumpe (elektrisch angetrieben)
- 2a: Elektromotor (Ölpumpe 2)
- 3: Ölsumpf
- 4: Ansaugfilter
- 5: Druckkanal
- 6: Pumpensteuerungseinheit
- 7: Steuerstrom
- 8: Bordnetz
- 9: Verteilergetriebe
- 10: Ölpumpe (mechanisch angetrieben)
- 11: Antriebsmotor
- 12: Getriebe
- 13: Hinterachse
- 14: Vorderachse
- 15: drehfestes Bauteil, Gehäuse

## Patentansprüche

1. Hydrauliksystem an Kraftfahrzeugen, mit zumindest einer hydraulisch betätigbaren Kupplung, welche als nasslaufende Kupplung (1) ausgebildet ist, wobei zur Betätigung derselben von einer Ölpumpe ein Öldruck bereitstellbar ist, und wobei die Druckansteuerung der Kupplung (1) unmittelbar und ausschließlich mittels einer elektrisch antreibbaren und elektronisch ansteuerbaren ersten Ölpumpe (2) bewerkstelligt ist, wobei zur Deckung eines etwaigen Kühlölvotumenstromes der Kupplung (1) eine mechanisch angetriebene zweite Ölpumpe (10) zugeordnet ist, **dadurch gekennzeichnet, dass** der Saug- oder der Druckseite der zweiten Ölpumpe (10) zum Freischalten der Kühlung zumindest ein hydraulisch betätigbares Schaltventil zugeordnet ist, welches bedarfsgerecht über den von der elektronischen Pumpensteuerungseinheit (6) vorgegebenen Ansteuerdruck der ersten Ölpumpe (2) betätigbar ist.

2. Hydrauliksystem an Kraftfahrzeugen, mit zumindest einer hydraulisch betätigbaren Kupplung, welche als nasslaufende Kupplung (1) ausgebildet ist, wobei zur Betätigung derselben von einer Ölpumpe ein Öldruck bereitstellbar ist, und wobei die Druckansteuerung der Kupplung (1) unmittelbar und ausschließlich mittels einer elektrisch antreibbaren und elektronisch ansteuerbaren ersten Ölpumpe (2) bewerkstelligt ist, wobei zur Deckung eines etwaigen Kühlölvolumenstromes der Kupplung (1) eine mechanisch angetriebene zweite Ölpumpe (10) zugeordnet ist, **dadurch gekennzeichnet, dass** der Saug- oder der Druckseite der zweiten Ölpumpe (10) zum Freischalten der Kühlung zumindest ein elektrisch betätigbarer Aktuator zugeordnet ist, welcher bedarfsgerecht von der elektronischen Pumpensteuerungseinheit (6) oder jeglichen anderen geeigneten Steuerungseinheit aktivierbar oder deaktivierbar ist.

3. Hydrauliksystem nach Anspruch 1 oder 2, **dadurch gekennzeichnet, dass** der ernsten. Ölpumpe (2) zur Regelung des Öldruckes zumindest ein Öldrucksensor zugeordnet ist, der seine Messwerte einer elektronischen Pumpensteuereinheit (6) zur Verfügung stellt, welche in Abhängigkeit von bereitgestellten Kupplungsdruck- und/oder Kupplungsdrehmomentvorgaben Steuersignale zur Ansteuerung des Elektromotors (2a) der ersten Ölpumpe (2) generiert.

4. Hydrauliksystem nach Anspruch 1 oder 2, **dadurch gekennzeichnet, dass** der ersten Ölpumpe (2) zur Regelung des Öldruckes zumindest eine Pumpenstromerfassungssensor oder ein Pumpendrehmomentsensor oder ein Pumpendrehzahlsensor zugeordnet ist, wobei die ermittelten Messwerte einer elektronischen Pumpensteuerungseinheit (6) zur Verfügung gestellt werden, die in Abhängigkeit von bereitgestellten Kupplungsdruck- und/oder Kupplungsdrehmomentvorgaben Steuersignale zur Ansteuerung des Elektromotors (2a) der ersten Ölpumpe (2) generiert.

5. Hydrauliksystem nach Anspruch 4, **dadurch gekennzeichnet, dass** bei der Ermittlung der Steuersignale zur Ansteuerung des Elektromotors (2a) der ersten Ölpumpe (2) die gemessene aktuelle Temperatur und/oder Viskosität des Hydrauliköls berücksichtigt ist.

6. Hydrauliksystem nach zumindest einem der Ansprüche 3 bis 5, **dadurch gekennzeichnet, dass** die Pumpensteuerurigseinheit (6) als separate Steuerungseinheit ausgebildet ist oder in andere Steuerungsvorrichtungen des Antriebsstrangs des Kraftfahrzeugs, wie eine Getriebesteuerungsvorrichtung oder eine Motorsteuerungsvorrichtung implementiert ist.

7. Hydrauliksystem nach zumindest einem der Ansprüche 1 bis 6, **dadurch gekennzeichnet, dass** der ersten Ölpumpe (2) zur Gewährleistung eines Dauerbetriebes derselben und eines dynamischen Ansprechens derselben auf variierende Druckvorgaben ein Bypass im Hydraulikkreislauf mit einem Bypassventil oder einer Bypassdrossel zugeordnet ist.

8. Hydrauliksystem nach Anspruch 7, **dadurch gekennzeich**n e t , dass der Bypass derart ausgebildet ist, dass die realisierte "inner Leckage" der ersten Ölpumpe (2) der Saugseite derselben und/oder der Kupplung (1) zumindest als Grundversorgung für eine Kühlung zuführbar ist.

9. Hydrauliksystem nach zumindest einem der Ansprüche 1 bis 8, **dadurch gekennzeichnet, dass** die zweite Ölpumpe (10) mit der Kupplung (1) derart wirkverbunden ist, dass dieselbe infolge einer Drehzahldifferenz zwischen der Primärseite und der Sekundärseite der Kupplung (1) antreibbar ist.

10. Hydrauliksystem nach zumindest einem der Ansprüche 1 bis 9, **dadurch gekennzeichnet, dass** die zweite Ölpumpe (10) mit der Kupplung (1) über eine antriebstechnisch vorgeschaltete Übersetzung derart wirkverbunden ist, dass sich in jedem Fall eine Mindest-Pumpendrehzahl einstellt, die eine Ölförderung bewirkt.

11. Hydrauliksystem nach zumindest einem der Ansprüche 1 bis 8, **dadurch gekennzeichnet, dass** die zweite Ölpumpe (10) von einer beliebigen vorhandenen Bauteildrehzahl angetrieben ist und sich an einem drehfesten Bauteil (15) abstützt.

12. Hydrauliksystem nach Anspruch 11, **dadurch gekennzeichnet, dass** die Bauteildrehzahl von einem beliebigen drehenden Bauteil des Antriebsstrangs des Kraftfahrzeugs bereitgestellt ist, und dass das drehfeste Bauteil (15) durch ein Gehäuseteil, wie etwa einem Getriebegehäuse gebildet ist.

13. Hydrauliksystem nach zumindest einem der Ansprüche 2 bis 12, **dadurch gekennzeichnet, dass** der Aktuator durch ein Magnetventil gebildet ist.

14. Hydrauliksystem nach zumindest einem der Ansprüche 1 bis 13, **dadurch gekennzeichnet, dass** die Kühlung sowohl bei aktiver Kupplungsbetätigung als auch dann, wenn die Kupplung (1) in einem zumindest teilweise offenen Zustand mit Differenzdrehzahl betrieben werden muss, über das Öffnen des zumindest einen hydraulisch betätigbaren Schaltventils oder elektrisch betätigbaren Aktuators freigeschaltet und ansonsten unterbrochen ist.

15. Hydrauliksystem nach zumindest einem der Ansprüche 1 bis 13, **dadurch gekennzeichnet, dass** der Kupplung (1) ein Pufferspeicher zur vorübergehenden Aufnahme von überschüssigem Kühlöl infolge erhöhter Fördermengen bei kurzzeitigen Drehzahlspitzen der zweiten Ölpumpe (10) zugeordnet ist.

16. Hydrauliksystem nach Anspruch 15, **dadurch gekennzeich**n e t , dass der Ölüberschuss zur Nachkühlung einsetzbar ist, nachdem sich die Drehzahlspitze und demgemäß das Volumenstrommaximum abgebaut haben.

17. Hydrauliksystem nach zumindest einem der Ansprüche 1 bis 16, **dadurch gekennzeichnet, dass** die Kühlölzufuhr zur Kupplung (1) von radial innen nach radial außen oder umgekehrt geführt ausgebildet ist.

## Claims

1. Hydraulic system in motor vehicles, having at least one hydraulically actuable clutch which is designed as a wet-running clutch (1), with it being possible for an oil pressure to be provided by an oil pump in order to operate said clutch, and with the pressure actuation of the clutch (1) being realized directly and exclusively by means of an electrically drivable and electronically actuable first oil pump (2), with a mechanically driven second oil pump (10) being provided to cover any cooling oil volume flow of the clutch (1), **characterized in that** the suction or the pressure side of the second oil pump (10) is assigned at least one hydraulically operable switching valve to activate the cooling, which switching valve can be operated according to demand by means of the actuation pressure, predefined by the electronic pump control unit (6), of the first oil pump (2).

2. Hydraulic system in motor vehicles, having at least one hydraulically actuable clutch which is designed as a wet-running clutch (1), with it being possible for an oil pressure to be provided by an oil pump in order to operate said clutch, and with the pressure actuation of the clutch (1) being realized directly and exclusively by means of an electrically drivable and electronically actuable first oil pump (2), with a mechanically driven second oil pump (10) being provided to cover any cooling oil volume flow of the clutch (1), **characterized in that** the suction or the pressure side of the second oil pump (10) is assigned at least one electrically operable actuator to activate the cooling, which actuator can be activated or deactivated according to demand by the electronic pump control unit (6) or any other suitable control unit.

3. Hydraulic system according to Claim 1 or 2, **characterized in that**, to regulate the oil pressure, the first oil pump (2) is assigned at least one oil pressure sensor which provides its measurement values to an electronic pump control unit (6) which, as a function of provided clutch pressure and/or clutch torque setpoint values, generates control signals for actuating the electric motor (2a) of the first oil pump (2).

4. Hydraulic system according to Claim 1 or 2, **characterized in that**, to regulate the oil pressure, the first oil pump (2) is assigned at least one pump flow measuring sensor or a pump torque sensor or a pump speed sensor, with the determined measurement values being provided to an electronic pump control unit (6) which, as a function of provided clutch pressure and/or clutch torque setpoint values, generates control signals for actuating the electric motor (2a) of the first oil pump (2).

5. Hydraulic system according to Claim 4, **characterized in that** the measured present temperature and/or viscosity of the hydraulic oil is taken into consideration in the determination of the control signals for actuating the electric motor (2a) of the first oil pump (2).

6. Hydraulic system according to at least one of Claims 3 to 5, **characterized in that** the pump control unit (6) is formed as a separate control unit or is implemented in other control devices of the drivetrain of the motor vehicle, such as a transmission control device or an engine control device.

7. Hydraulic system according to at least one of Claims 1 to 6, **characterized in that**, to ensure continuous operation the first oil pump (2) and a dynamic response of the latter to varying pressure setpoint values, said first oil pump is assigned a bypass in the hydraulic circuit with a bypass valve or with a bypass throttle.

8. Hydraulic system according to Claim 7, **characterized in that** the bypass is designed such that the realized "internal leakage" of the first oil pump (2) can be supplied to the suction side of the latter and/or to the clutch (1) at least as a basic supply for cooling.

9. Hydraulic system according to at least one of Claims 1 to 8, **characterized in that** the second oil pump (10) is operatively connected to the clutch (1) in such a way that said oil pump can be driven as a result of a rotational speed difference between the primary side and the secondary side of the clutch (1).

10. Hydraulic system according to at least one of Claims 1 to 9, **characterized in that** the second oil pump (10) is operatively connected to the clutch (1) via a gear ratio connected upstream in terms of drive, in such a way that in all situations a minimum pump rotational speed is generated which produces a feed of oil.

11. Hydraulic system according to at least one of Claims 1 to 8, **characterized in that** the second oil pump (10) is driven by an arbitrary existing component rotational speed and is supported on a rotationally fixed component (15).

12. Hydraulic system according to Claim 11, **characterized in that** the component rotational speed is provided by an arbitrary rotating component of the drivetrain of the motor vehicle, and **in that** the rotationally fixed component (15) is formed by a housing part such as a transmission housing.

13. Hydraulic system according to at least one of Claims 2 to 12, **characterized in that** the actuator is formed by a solenoid valve.

14. Hydraulic system according to at least one of Claims 1 to 13, **characterized in that** the cooling is activated, by virtue of the at least one hydraulically actuable switching valve or electrically operable actuator being opened, both during active clutch actuation and also when the clutch (1) must be operated in an at least partially open state with a rotational speed difference, and said cooling is otherwise deactivated.

15. Hydraulic system according to at least one of Claims 1 to 13, **characterized in that** the clutch (1) is assigned a buffer accumulator for temporarily storing excess cooling oil resulting from increased feed rates during brief rotational speed peaks of the second oil pump (10).

16. Hydraulic system according to Claim 15, **characterized in that** the excess oil can be used for aftercooling after the rotational speed peak and accordingly the volume flow maximum have been depleted.

17. Hydraulic system according to at least one of Claims 1 to 16, **characterized in that** the cooling oil supply to the clutch (1) is guided from radially inside to radially outside or vice versa.

## Revendications

1. Système hydraulique sur des véhicules automobiles, comprenant au moins un embrayage à commande hydraulique, qui est réalisé sous forme d'embrayage humide (1), une pression d'huile pouvant être fournie pour l'actionnement de cet embrayage par une pompe à huile, et la commande par pression de l'embrayage (1) étant mise en oeuvre directement et exclusivement au moyen d'une première pompe à huile (2) pouvant être entraînée électriquement et commandée électroniquement, une deuxième pompe à huile (10) entraînée mécaniquement étant utilisée pour couvrir un débit volumique d'huile de refroidissement éventuel de l'embrayage (1), **caractérisé en ce que** le côté d'aspiration ou le côté de pression de la deuxième pompe à huile (10) est associé à au moins une soupape de commutation à commande hydraulique pour activer le refroidissement, ladite soupape de commutation pouvant au besoin être actionnée par le biais de la pression de commande de la première pompe à huile (2) prédéfinie par l'unité de commande électronique de la pompe (6).

2. Système hydraulique sur des véhicules automobiles, comprenant au moins un embrayage à commande hydraulique, qui est réalisé sous forme d'embrayage humide (1), une pression d'huile pouvant être fournie pour l'actionnement de cet embrayage par une pompe à huile, et la commande par pression de l'embrayage (1) étant mise en oeuvre directement et exclusivement au moyen d'une première pompe à huile (2) pouvant être entraînée électriquement et commandée électroniquement, une deuxième pompe à huile (10) entraînée mécaniquement étant utilisée pour couvrir un débit volumique d'huile de refroidissement éventuel de l'embrayage (1), **caractérisé en ce que** le côté d'aspiration ou le côté de pression de la deuxième pompe à huile (10) est associé à au moins un actionneur à commande électrique pour activer le refroidissement, qui peut être activé ou désactivé au besoin par l'unité de commande de pompe électronique (6) ou par chaque autre unité de commande appropriée.

3. Système hydraulique selon la revendication 1 ou 2, **caractérisé en ce que** la première pompe à huile (2) pour la régulation de la pression d'huile est associée à au moins un capteur de pression d'huile qui fournit ses valeurs de mesure à une unité de commande de pompe électronique (6), qui produit, en fonction de données préalables de couple d'embrayage et/ou de pression d'embrayage fournies, des signaux de commande pour la commande du moteur électrique (2a) de la première pompe à huile (2).

4. Système hydraulique selon la revendication 1 ou 2, **caractérisé en ce que** la première pompe à huile (2) pour la régulation de la pression d'huile est associée au moins à un capteur de détection de courant de pompe ou à un capteur de couple de pompe ou un capteur de régime de pompe, les valeurs de mesure détectées étant fournies à une unité de commande de pompe électronique (6), qui produit, en fonction de données préalables de couple d'embrayage et/ou de pression d'embrayage fournies, des signaux de commande pour la commande du moteur électrique (2a) de la première pompe à huile (2).

5. Système hydraulique selon la revendication 4, **caractérisé en ce que** lors de la détection des signaux de commande pour la commande du moteur électrique (2a) de la première pompe à huile (2), la température et/ou la viscosité actuelles mesurées de l'huile hydraulique sont prises en compte.

6. Système hydraulique selon au moins l'une quelconque des revendications 3 à 5, **caractérisé en ce que** l'unité de commande de pompe (6) est réalisée sous forme d'unité de commande séparée ou est mise en oeuvre dans d'autres dispositifs de commande de la chaîne cinématique du véhicule automobile, comme un dispositif de commande de transmission ou un dispositif de commande de moteur.

7. Système hydraulique selon au moins l'une quelconque des revendications 1 à 6, **caractérisé en ce que** la première pompe à huile (2) pour assurer un fonctionnement durable de celle-ci, et une réaction dynamique de celle-ci à des données préalables de pression variables, est associée à une dérivation dans le circuit hydraulique, comprenant une soupape de dérivation ou un étranglement de dérivation.

8. Système hydraulique selon la revendication 7, **caractérisé en ce que** la dérivation est réalisée de telle sorte que la "fuite interne" réalisée de la première pompe à huile (2) puisse être acheminée au côté d'aspiration de celle-ci et/ou à l'embrayage (1) au moins sous forme d'alimentation de base pour un refroidissement.

9. Système hydraulique selon au moins l'une quelconque des revendications 1 à 8, **caractérisé en ce que** la deuxième pompe à huile (10) est connectée fonctionnellement à l'embrayage (1) de telle sorte que celle-ci puisse être entraînée à la suite d'une différence de régime entre le côté primaire et le côté secondaire de l'embrayage (1).

10. Système hydraulique selon au moins l'une quelconque des revendications 1 à 9, **caractérisé en ce que** la deuxième pompe à huile (10) est connectée fonctionnellement à l'embrayage (1) par le biais d'une multiplication montée en aval par une technique d'entraînement, de telle sorte que dans chaque cas il s'établisse un régime de pompe minimal qui provoque une alimentation en huile.

11. Système hydraulique selon au moins l'une quelconque des revendications 1 à 8, **caractérisé en ce que** la deuxième pompe à huile (10) est entraînée par le régime d'un composant quelconque présent, et s'appuie sur un composant solidaire en rotation (15).

12. Système hydraulique selon la revendication 11, **caractérisé en ce que** le régime du composant est fourni par un composant rotatif quelconque de la chaîne cinématique du véhicule automobile, et **en ce que** le composant solidaire en rotation (15) est formé par une partie de boîtier, comme par exemple un boîtier de transmission.

13. Système hydraulique selon au moins l'une quelconque des revendications 2 à 12, **caractérisé en ce que** l'actionneur est formé par une électrovanne.

14. Système hydraulique selon au moins l'une quelconque des revendications 1 à 13, **caractérisé en ce que** le refroidissement, à la fois lorsque la commande de l'embrayage est activée, et lorsque l'embrayage (1) doit être utilisé dans un état au moins partiellement ouvert avec un régime différentiel, est activé par le biais de l'ouverture de l'au moins une soupape de commutation pouvant être commandée hydrauliquement ou de l'actionneur pouvant être commandé électriquement, et est par ailleurs interrompu.

15. Système hydraulique selon au moins l'une quelconque des revendications 1 à 13, **caractérisé en ce que** l'embrayage (1) est associé à un accumulateur tampon pour recevoir temporairement de l'huile de refroidissement en excès suite au refoulement de quantités accrues en cas de brèves pointes de régime de la deuxième pompe à huile (10).

16. Système hydraulique selon la revendication 15, **caractérisé en ce que** l'excès d'huile peut être utilisé pour le post-refroidissement, après que les pointes de régime et par conséquent le maximum de débit volumique sont redescendus.

17. Système hydraulique selon au moins l'une quelconque des revendications 1 à 16, **caractérisé en ce que** l'alimentation en huile de refroidissement de l'embrayage (1) est réalisé de manière guidée de radialement à l'intérieur vers radialement à l'extérieur ou inversement.
